# FASCICULE DE BREVET EUROPEEN

(11) **EP 3 123 067 B1**
(45) Date de publication et mention de la délivrance du brevet: **04.11.2020**
(21) Numéro de dépôt: 15711772.2
(22) Date de dépôt: 24.03.2015
(51) Int. Cl.: F16L 11/08, G01M 3/28, F16L 11/20

(54) **CONDUITE FLEXIBLE DE TRANSPORT DE FLUIDE, MÉTHODE DE FABRICATION ET PROCÉDÉ DE DÉTERMINATION ASSOCIÉS**
BIEGSAMES ROHR FÜR DEN TRANSPORT VON FLÜSSIGKEITEN, ZUGEHÖRIGE FERTIGUNG UND BESTIMMUNGSVERFAHREN
FLEXIBLE PIPE FOR TRANSPORTING FLUID, RELATED MANUFACTURING AND DETERMINATION METHODS

(30) Priorité: 26.03.2014 FR 1452584
(43) Date de publication de la demande: 01.02.2017
(73) Titulaire: Technip N-Power, 92400 Courbevoie (FR)
(72) Inventeur: FERRAZ, Jean-Paul, 22290-290 Rio De Janeiro (BR); LECOINTE, Edouard, 2081-042 Cep RJ Rio De Janeiro (BR)
(74) Mandataire: Lavoix
(86) Numéro de dépôt international: PCT/EP2015/056289
(87) Numéro de publication internationale: WO 2015/144723

(56) Documents cités:
- WO-A1-01/44706
- WO-A1-2012/110637
- WO-A1-2013/188812
- BR-A- PI0 506 118
- FR-A1- 2 852 658
- US-A- 6 039 083

## Description

La présente invention concerne une conduite flexible de transport de fluide, selon le préambule de la revendication 1.

La conduite est en particulier une conduite flexible de type non liée (« unbonded ») destinée au transport d'un fluide à travers une étendue d'eau, tel qu'un océan, une mer, un lac ou une rivière.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

D'une manière connue, une telle conduite comporte une structure interne tubulaire comprenant au moins une gaine de pression. La conduite comporte des nappes d'armures de traction disposées autour de la structure interne tubulaire.

La conduite comporte en outre, dans certains cas, une voûte de pression, formée d'au moins un fil agrafé présentant par exemple un profil en T ou un profil en Z. Une frette peut également être enroulée en spirale autour de la voûte de pression.

Les conduites du type précité sont généralement disposées à travers une étendue d'eau, entre un ensemble de fond, destiné à recueillir le fluide exploité dans le fond de l'étendue d'eau et un ensemble de surface flottant ou non-flottant destiné à collecter et à distribuer le fluide. L'ensemble de surface peut être une plateforme semi-submersible, un FPSO, une plateforme fixe, une tour flexible, une plateforme à lignes tendues ou tout autre ensemble flottant ou non-flottant.

Dans certains cas, notamment pour l'exploitation de fluides en eaux profondes, la conduite doit être disposée dans l'étendue d'eau pendant des périodes de temps très longues, par exemple de plusieurs dizaines d'années.

Parfois, des phénomènes de perte d'étanchéité dans l'espace annulaire à l'extérieur de la gaine interne peuvent apparaître, du fait de la pression très élevée s'appliquant sur la gaine externe.

La pénétration d'eau dans l'espace annulaire entre la gaine externe et la gaine interne conjuguée à la perméation de gaz diffusé à travers la gaine interne est susceptible d'engendrer des effets préjudiciables, voire critiques sur la tenue mécanique des couches situées dans l'annulaire, telles que les couches d'amures en métal ou les bandes de renfort en composite.

Des phénomènes de corrosion, de fissuration induite par l'hydrogène ou les sulfures, d'hydrolyse de polymères, ou/et de vieillissement des fibres de carbones sont alors susceptibles de se produire et de causer une défaillance de la conduite.

Pour pallier ce problème, il est connu de fabriquer les couches d'armures avec des aciers très résistants ou/et d'augmenter les dimensions de fils d'armures. Ceci augmente le coût et/ou le poids de la conduite.

En variante, une conduite comme celle décrite dans BR PI 05 06 118 comporte en outre une gaine intermédiaire disposée entre la gaine interne et la gaine externe. La gaine intermédiaire assure une étanchéité additionnelle à la couche d'armures internes dans le cas où la gaine externe subirait une rupture.

Une autre conduite flexible est décrite dans WO 01/44706 A1.

Il est néanmoins important et parfois requis pour le fabricant de la conduite de tester et de prouver que la structure interne ne sera pas affectée même en cas de rupture de la gaine externe.

Un but de l'invention est donc de disposer d'une conduite flexible de transport de fluide, propre à convoyer un fluide à très haute pression, qui soit très résistante dans le temps pour des applications dynamiques et qui permette en sus le contrôle et la garantie de l'intégrité de la conduite flexible.

À cet effet, l'invention a pour objet une conduite selon la revendication 1.

La conduite selon l'invention peut comprendre l'une ou plusieurs des caractéristiques des revendications dépendantes 2 à 10, prise isolément ou suivant toute combinaison techniquement possible selon les revendications.

L'invention a pour objet une méthode de fabrication d'une conduite flexible selon la revendication 11.

L'invention a également pour objet un procédé de détermination de l'intégrité d'une conduite flexible selon la revendication 12.

Le procédé selon l'invention peut comprendre l'une ou plusieurs des caractéristiques des revendications 13 et 14, prise(s) isolément ou suivant toute combinaison techniquement possible selon les revendications.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'une conduite flexible selon l'invention ;
- la figure 2 est une vue schématique partielle, prise en coupe suivant un plan axial médian de la conduite de la figure 1 ;
- la figure 3 est une vue schématique partielle, prise en coupe suivant un plan axial médian d'une deuxième conduite flexible selon l'invention ;
- la figure 4 est une vue schématique partielle, prise en coupe suivant un plan axial médian d'une troisième conduite flexible selon l'invention.

Dans tout ce qui suit, les termes « extérieur » ou « extérieurement » et « intérieur » ou « intérieurement » s'entendent généralement de manière radiale par rapport à un axe A-A' de la conduite, le terme « extérieur » s'entendant comme relativement plus éloigné radialement de l'axe A-A' et le terme « intérieur » s'entendant comme relativement plus proche radialement de l'axe A-A' de la conduite.

Par ailleurs, les termes « amont » et « aval » s'entendent généralement par rapport au sens normal de circulation d'un fluide pétrolier au sein de la conduite.

Les pressions mentionnées sont des pressions différentielles, sauf indication contraire.

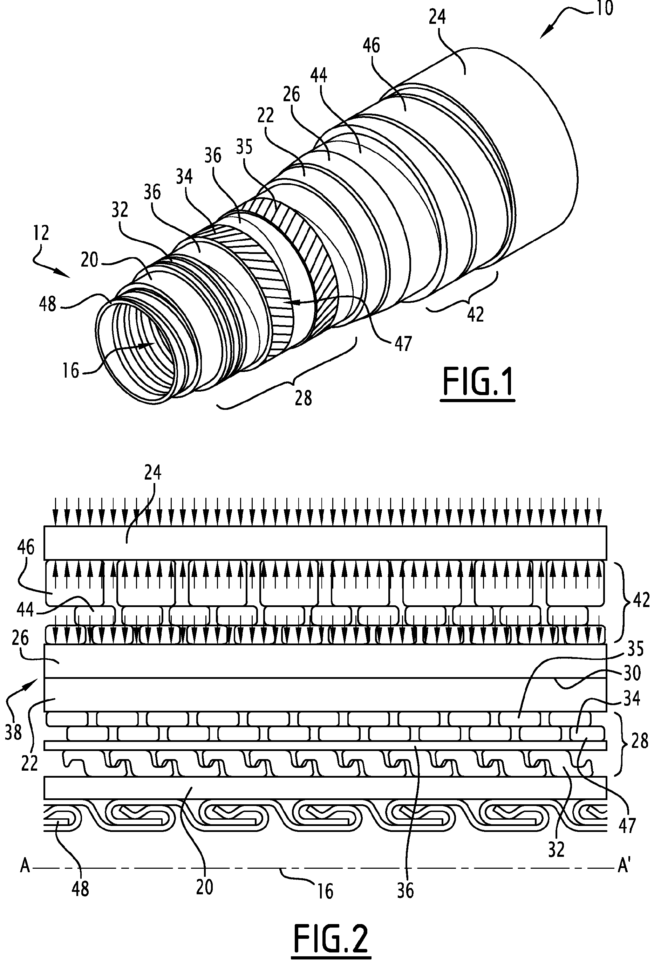

Une première conduite flexible 10 selon l'invention, est illustrée partiellement par les figures 1 et 2.

La conduite flexible 10 comporte un tronçon central 12 illustré en partie sur la figure 1. Elle comporte, à chacune des extrémités axiales du tronçon central 12, un embout d'extrémité (non représenté).

En référence à la figure 1, la conduite 10 délimite un passage central 16 de circulation d'un fluide, avantageusement d'un fluide pétrolier. Le passage central 16 s'étend suivant un axe A-A', entre l'extrémité amont et l'extrémité aval de la conduite 10. Il débouche à travers les embouts.

Le diamètre du passage central 16 est avantageusement compris entre 50 mm (2") et 560 mm (22").

Le fluide convoyé par la conduite est par exemple un gaz ou un liquide extrait du sous-sol, ou réinjecté dans celui-ci.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 50 m et 3000 m.

L'installation d'exploitation de fluide comporte un ensemble de surface, généralement flottant, et un ensemble de fond (non représenté) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite.

Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 10 délimite une pluralité de couches concentriques autour de l'axe A-A', qui s'étendent continûment le long du tronçon central 12 jusqu'aux embouts situés aux extrémités de la conduite.

En référence à la figure 2, la conduite 10 comporte au moins une gaine interne 20 à base de matériau polymère constituant une gaine de pression.

La conduite 10 comprend une première gaine intermédiaire 22, étanche disposée à l'extérieur de la gaine interne 20, et au moins une couche externe disposée à l'extérieur de la première gaine intermédiaire 22, constituée ici par une gaine externe 24.

Selon l'invention, la conduite 10 comporte en outre une seconde gaine intermédiaire 26 étanche, interposée entre la première gaine intermédiaire 22 et la couche externe 24 destinée au contrôle de l'étanchéité de la première gaine intermédiaire 22.

En référence à la figure 2, la première gaine intermédiaire 22 définit avec la gaine interne 20, un premier espace annulaire 28 étanche de réception d'un ensemble de renfort de la gaine interne 20. Elle définit avec la seconde gaine intermédiaire 26 un espace annulaire de test 30, pour la vérification de l'intégrité de la première gaine intermédiaire 22.

Dans le premier espace annulaire 28, la conduite 10 comporte avantageusement une voûte de pression 32, et une pluralité de couches d'armures de traction 34, 35 internes, disposées extérieurement par rapport à la voûte de pression 32.

La conduite 10 comporte en outre avantageusement des bandes de protection 36 interposées entre la voûte 32 et une première couche d'armures 34, et interposées entre les couches d'armure 34, 35.

Le premier espace annulaire 28 est généralement protégé du liquide extérieur à la conduite 10 par la présence de la gaine externe 24 et si la gaine externe 24 se rompt, par la seconde gaine intermédiaire 26.

La conduite 10 comporte un canal 37 d'amenée d'un fluide interne 38 dans l'espace annulaire de test 30 ménagé à travers l'embout et représenté schématiquement sur la figure 2.

Dans le mode de réalisation de la figure 1 ou 2, l'espace annulaire 30 est dépourvu de couche intermédiaire.

La seconde gaine intermédiaire 26 définit avec la couche externe, un second espace annulaire interne 42 de renfort et de protection de la seconde gaine intermédiaire 26.

Dans le second espace annulaire interne 42, la conduite 10 présente une couche de maintien 44 de la pression de test sur la seconde gaine intermédiaire 26 et avantageusement une couche de protection 46 propre à empêcher des endommagements de la couche de maintien 44.

De préférence, la conduite 10 comporte en outre une carcasse interne 48 disposée à l'intérieur de la gaine interne 20.

La carcasse 48, lorsqu'elle est présente, est formée par exemple d'un feuillard métallique profilé, enroulé en spirale. Comme illustré par la figure 2, les spires du feuillard sont avantageusement agrafées les unes aux autres, ce qui permet de reprendre les efforts radiaux d'écrasement.

L'enroulement hélicoïdal du feuillard métallique profilé formant la carcasse 48 est à pas court, c'est-à-dire qu'il présente un angle d'hélice de valeur absolue proche de 90°, typiquement compris entre 75° et 90°.

Dans cet exemple, la carcasse 48 est disposée à l'intérieur de la gaine interne 20. La conduite est alors désignée par le terme anglais « rough bore » en raison de la géométrie de la carcasse 48.

En variante (non représentée), la conduite flexible 10 est dépourvue de carcasse interne 48, elle est alors désignée par le terme anglais « smooth bore ».

De manière connue, la gaine interne 20 est destinée à confiner de manière étanche le fluide transporté dans le passage 16. Elle est formée en matériau polymère, par exemple à base d'une polyoléfine telle que du polyéthylène, à base d'un polyamide tel que du PA11 ou du PA12, ou à base d'un polymère fluoré tel que du polyfluorure de vinylidène (PVDF).

L'épaisseur de la gaine interne 20 est par exemple comprise entre 5 mm et 20 mm.

Dans cet exemple, la voûte de pression 32 est destinée à reprendre les efforts liés à la pression régnant à l'intérieur de la gaine interne 20. Elle est par exemple formée d'un fil profilé métallique enroulé en hélice autour de la gaine interne 20. Le fil profilé présente de préférence une géométrie, notamment en forme de Z. La géométrie en Z permet d'améliorer la résistance mécanique générale de la conduite 10 et permet aussi de réduire sa masse.

En variante, le fil profilé présente une géométrie en forme de T, de U, de K, de X ou de I.

La voûte de pression 32 est enroulée en hélice à pas court autour de la gaine interne 20, c'est-à-dire avec un angle d'hélice de valeur absolue proche de 90°, typiquement compris entre 75° et 90°.

Dans l'exemple représenté sur la figure 1, la conduite flexible 10 comporte au moins une paire de couches d'armures internes 34, 35, dont une est représentée sur la figure 1.

En variante, la conduite flexible 10 comporte plusieurs paires de couches d'armures internes 34, 35 superposées les unes sur les autres, par exemple deux paires de couches d'armures internes 34, 35.

Chaque paire comporte une première couche d'armures internes 34 appliquée sur la voûte 32 ou sur une autre paire de couches d'armures internes, et une deuxième couche d'armures internes 35, disposée autour de la première couche d'armures internes 34.

Chaque couche d'armures internes 34, 35 comporte au moins un élément d'armure longitudinal 47 enroulé à pas long autour de l'axe A-A' de la conduite 10.

Par « enroulé à pas long », on entend que la valeur absolue de l'angle d'hélice est inférieure à 60°, et est typiquement comprise entre 20° et 60°.

Dans l'exemple représenté sur la figure 1, la valeur absolue de l'angle d'hélice de chaque couche d'armures internes 34, 35 est inférieure à 45°, et est notamment comprise entre 20° et 30°, et est environ égale à 25°.

Les éléments d'armure 47 d'une première couche 34 sont enroulés généralement suivant un angle opposé par rapport aux éléments d'armure 47 d'une deuxième couche 35. Ainsi, si l'angle d'enroulement des éléments d'armure de la première couche 34 est égal à + a, α étant compris entre 20° et 60°, l'angle d'enroulement des éléments d'armure 47 de la deuxième couche 35 disposée au contact de la première couche 34 est par exemple de - a, avec α compris entre 20° et 60°.

Les éléments d'armure 47 sont par exemple formés par des fils métalliques ou en matériau composite, ou par des rubans à résistance mécanique élevée.

Dans cet exemple, chaque couche d'armures 34, 35 repose sur au moins une bande anti-usure 36. La bande anti-usure 36 est par exemple réalisée en plastique, notamment à base d'un polyamide ou d'un polyfluorure de vinylidène (PVDF). Elle présente une épaisseur inférieure à l'épaisseur de chaque gaine 20, 22, 24, 26.

La première gaine intermédiaire 22 est destinée à conserver étanche et sec l'espace annulaire interne 28. Elle est avantageusement réalisée en matériau polymère, notamment à base d'une polyoléfine, tel que du polyéthylène ou du polypropylène élastomère du type TP Flex™ ou HD-Flex™, à base d'un polyamide, tel que du PA11 ou du PA12, ou à base d'un polymère fluoré tel que du polyfluorure de vinylidène (PVDF).

L'épaisseur de la première gaine intermédiaire 22 est par exemple comprise entre 5 mm et 15 mm.

La seconde gaine intermédiaire 26 est destinée à délimiter de manière étanche vers l'extérieur l'espace annulaire de test 30. Comme la première gaine intermédiaire 22, elle est avantageusement réalisée en matériau polymère, notamment à base d'une polyoléfine, tel que du polyéthylène ou du polypropylène élastomère du type TP Flex™ ou HD-Flex™, à base d'un polyamide, tel que du PA11 ou du PA12, ou à base d'un polymère fluoré tel que du polyfluorure de vinylidène (PVDF).

L'épaisseur de la seconde gaine intermédiaire 26 est par exemple comprise entre 5 mm et 15 mm.

Le fluide interne 38 est reçu de manière étanche dans l'espace annulaire de test 30 lors de la phase de test. Dans ce cas, la pression est comprise entre quelques bars à une pression supérieure à 50 bars, avantageusement supérieure à 500 bars, et notamment une pression maximale comprise entre 80 bars et 450 bars.

Cette pression correspond à la pression de conception de la conduite, multipliée par un facteur de sécurité. La pression de conception est généralement la pression maximale extérieure que subira la conduite au cours de son utilisation (installation, abandon, exploitation).

Le fluide interne 38 est introduit dans l'espace annulaire de test 30 avantageusement à travers le canal 37 ménagé dans un embout d'extrémité, par exemple en partie haute (ou « top » en anglais) de la conduite 10.

Le fluide interne 38 est avantageusement un liquide ou un gaz, notamment de l'azote ou de l'eau.

La couche de maintien 44 de la pression de test est destinée à reprendre la pression intérieure s'appliquant sur la seconde gaine intermédiaire 26 lors de l'introduction d'un fluide 38 sous pression dans l'espace annulaire de test 30.

La couche de maintien 44 de la pression de test comprend par exemple au moins un ruban de renfort, notamment une bande en aramide à résistance mécanique élevée (Technora® ou Kevlar®), et/ou des fils enroulés autour de la seconde gaine intermédiaire 22, les fils ayant avantageusement une forme plane ou ronde, en acier ou en matériau composite.

La couche de maintien 44 de pression de test est avantageusement recouverte par la couche de protection 46.

La couche de protection 46 comporte par exemple au moins une gaine en polymère, au moins un ruban de renfort, notamment une bande en aramide à résistance mécanique élevée (Technora® ou Kevlar®), des fils enroulés autour de la couche de maintien de la pression de test, notamment de forme plane ou ronde, en acier ou en matériau composite, des bandes ou des joncs d'isolation et/ou des bandes polymérique ou composite comprenant notamment une matrice thermoplastique dans laquelle sont noyées des fibres de carbone ou des fibres de verre. et/ou une carcasse extérieure.

Avantageusement la couche de protection 46 est destinée à protéger et assurer l'étanchéité de la première gaine intermédiaire 22, en reprenant les efforts radiaux engendrés par la pression appliquée dans l'espace annulaire de test 30.

La gaine externe 24 est destinée à protéger mécaniquement la couche de protection 46 des efforts extérieurs pouvant être appliqués sur celle-ci, notamment lorsque la conduite flexible 10 est déroulée et posée en mer. En effet, la gaine externe 24 protège lors de la phase de pose, la conduite flexible 10 cheminant au travers d'au moins un système de guidage ou « tensionneur », destiné à guider la conduite flexible 10 vers le fond de la mer, le au moins un tensionneur étant monté sur l'équipement de pose fixé sur le pont du navire.

La gaine externe 24 est généralement la première barrière face à l'environnement extérieur empêchant la pénétration de fluide depuis l'extérieur de la conduite flexible 10 vers l'intérieur. Elle est avantageusement réalisée en matériau polymère, notamment à base d'une polyoléfine, tel que du polyéthylène ou du polypropylène élastomère du type TP Flex™ ou HD-Flex™, à base d'un polyamide, tel que du PA11 ou du PA12, ou à base d'un polymère fluoré tel que du polyfluorure de vinylidène (PVDF).

L'épaisseur de la gaine externe 24 est par exemple comprise entre 5 mm et 15 mm.

La réalisation de la conduite 10 va maintenant être décrite.

Initialement, la carcasse 48 est assemblée. La première gaine 20 est formée autour de la carcasse 48, par exemple par extrusion du polymère la constituant.

Puis, la voûte 32 est enroulée autour de la première gaine 20. Les couches d'armures internes 34, 35 sont ensuite mises en place autour de la voûte 32.

La première gaine intermédiaire 22 est alors formée autour des couches d'armures internes 34, 35, avantageusement par extrusion du polymère la constituant.

La seconde gaine intermédiaire 26 est formée autour de la première gaine intermédiaire 22, par exemple par extrusion du polymère la constituant.

La couche de maintien 44 de la pression de test est ensuite mise en place autour de la seconde gaine intermédiaire 26.

La couche de protection 46 est formée autour de la couche de maintien 44 de la pression de test.

Ensuite, la gaine externe 24 est formée autour de la couche de protection 46, par exemple par extrusion du polymère la constituant.

Les embouts de la conduite flexible 10 sont alors installés aux extrémités du tronçon central 12.

Puis, en fin de fabrication de la conduite 10, un test de détermination de l'intégrité dénommé « Factory Acceptance Test » en anglais, est réalisé. Du fluide interne 38 est introduit dans l'espace annulaire de test 30 par l'intermédiaire du canal 37 d'introduction ménagé dans un embout.

Le fluide interne 38 est alors pressurisé. Des mesures de pression sont réalisées dans l'espace annulaire de test 30 pour certifier la conformité de la conduite flexible 10.

Le test de pression réalisé au niveau de l'espace annulaire de test 30 est similaire au test en usine standardisé « Factory Acceptance Test », défini par le document normatif API 17J de l'American Petroleum Institute.

Ce test débute par une pressurisation de l'espace annulaire de test 30 à une pression égale à environ 110% de la pression nominale de test qui correspond typiquement à 1,5 fois la pression de conception de la conduite flexible 10 (ou pression externe vu par la conduite flexible 10).

Ensuite, une phase de stabilisation d'au moins deux heures, préférentiellement de dix heures, de la pression au sein de l'espace annulaire de test 30 est respectée pour vérifier l'équilibre en température et en pression du système, c'est-à-dire, vérifier que la pression reste sensiblement la même sur une courte période. A cet effet, une variation de 1% sur une période d'une heure est acceptable comme l'indique notamment la Norme API 17J.

Puis, le test se poursuit par une phase de maintien en pression de la conduite flexible 10 pendant une durée allant de quelques heures, par exemple durant au minimum 24 heures comme recommandé par la Norme API 17J, à quelques jours. Au cours de cette phase, la pression ne doit pas chuter en-dessous de la pression nominale de test et, la chute de pression ne doit pas être supérieure à typiquement 4% de la pression nominale de test.

Une fois l'essai réalisé, le fluide interne 38 est soit conservé, soit retiré de l'espace annulaire de test 30.

Une fois la conduite 10 installée dans l'étendue d'eau et lors de la mise en service, un test en exploitation, sensiblement équivalent au test en usine, est avantageusement mené à intervalles réguliers, pour vérifier la conservation de l'étanchéité de la gaine intermédiaire 22.

Le test comprend une étape de pressurisation du fluide interne 38 confiné dans l'espace annulaire test 30, à une pression comprise entre quelques bar jusqu'à une pression supérieure à 50 bars, avantageusement supérieure à 400 bars, et notamment une pression maximale comprise entre 70 bars et 300 bars.

La conduite flexible 10 est donc propre à subir un contrôle de l'étanchéité soit en fin de fabrication soit même lors de son exploitation, d'autant plus pratique à mettre en œuvre qu'il ne nécessite pas de chambre hyperbare.

Dans une variante de réalisation, la présente invention permet la réalisation d'un test de fatigue en dynamique tel que prévu dans la Norme API RP 17B.

La conduite flexible 10 est ainsi soumise à une pression externe durant toute la période du test.

Pour cela, on fabrique un tronçon de conduite flexible 10 ou prototype à échelle réelle (ou « full-scale » en langue anglaise) qui une fois fabriqué est installé sur un banc de test dynamique.

Le test de fatigue en dynamique débute par l'introduction d'un fluide interne 38 dans l'espace annulaire de test 30 du prototype « full-scale » de la conduite flexible 10 par l'intermédiaire du canal 37 d'introduction ménagé dans un embout.

L'espace annulaire de test 30 est ensuite pressurisé à une pression de l'ordre de quelques bar jusqu'à une pression supérieure à 50 bars, avantageusement supérieure à 400 bars, et notamment une pression maximale comprise entre 70 bars et 300 bars.

Ensuite, le banc de test dynamique en flexion et/ou en traction et/ou en compression sur lequel est installé le prototype « full-scale » de la conduite flexible 10 est mis en action pour une durée de plusieurs milliers, voire plusieurs millions de cycles.

Une fois l'essai terminé, l'espace annulaire de test 30 est dépressurisé et le tronçon de conduite flexible 10 ôté du banc de test. Le fluide interne 38 est soit conservé, soit retiré de l'espace annulaire de test 30.

Ainsi, un tel test permet de simuler et d'observer le comportement mécanique d'une conduite flexible installée à grandes profondeurs, avantageusement au-delà de 3000 mètres, et soumise à une pression externe (pression hydrostatique).

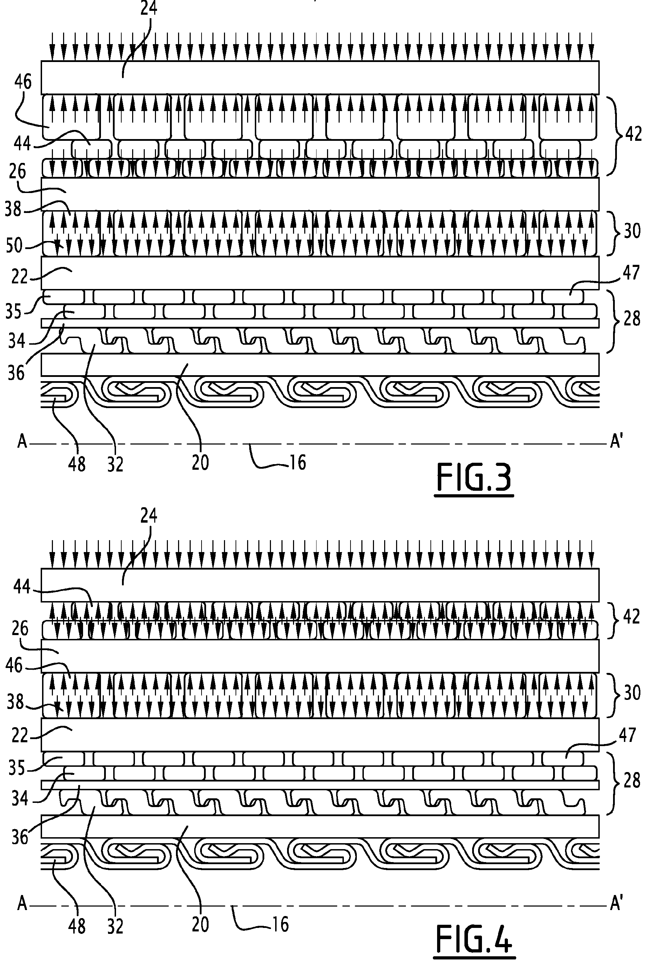

Une deuxième conduite flexible 10 selon l'invention est illustrée par la figure 3.

A la différence de la conduite 10, illustrée sur la figure 1, la conduite 10 de la figure 3 comporte une couche de remplissage 50 disposée dans l'espace annulaire de test 30.

Avantageusement, la couche de remplissage 50 occupe l'espace annulaire de test 30. Elle maintient ouvert le volume de vérification de l'étanchéité, ce qui facilite l'coulement du fluide interne 38 entre les première et seconde gaines intermédiaires 22, 26.

La couche de remplissage 50 comprend par exemple au moins un ruban de renfort, notamment une bande en aramide à résistance mécanique élevée (Technora® ou Kevlar®), des fils enroulés autour de la première gaine intermédiaire, notamment de forme plane ou ronde, en acier ou en matériau composite, des bandes et/ou des joncs d'isolation, et/ou une bande polymérique ou composite comprenant notamment une matrice thermoplastique dans laquelle sont noyées des fibres de carbone ou des fibres de verre.

Une troisième conduite flexible 10 selon l'invention est illustrée sur la figure 4. Cette conduite 10 diffère de celle représentée sur la figure 3, en ce que le second espace annulaire 42 est dépourvu de couche de protection 46. La gaine externe 24 est alors appliquée directement sur la couche de maintien 44 de la pression de test.

La couche de protection 46 remplace la couche de remplissage 50 dans l'espace annulaire de test 30.

Dans une variante (non représentée), la conduite est dépourvue d'une gaine externe 24 formant la couche de la conduite 10 au contact avec l'étendue d'eau.

La couche externe est alors formée par la couche de protection 46.

En variante, la couche externe présente une combinaison de couches ayant des caractéristiques différentes, notamment des propriétés d'isolation thermique.

En variante, la couche externe comporte plusieurs couches de protection 46 superposées les unes sur les autres.

## Revendications

1. Conduite flexible (10) de transport de fluide comprenant :
- une gaine interne (20) en polymère définissant un passage interne (16) de circulation d'un fluide transporté par la conduite (10) ;
- une première gaine intermédiaire (22) en polymère, disposée à l'extérieur de la gaine interne (20), la première gaine intermédiaire (22) et la gaine interne (20) délimitant entre elles un premier espace annulaire (28) ;
- au moins une couche d'armures internes (34, 35), disposée dans le premier espace annulaire (28) ;
- au moins une couche externe disposée à l'extérieur de la première gaine intermédiaire (22) ;
- une seconde gaine intermédiaire (26) en polymère, interposée entre la première gaine intermédiaire (22) et la couche externe,
**caractérisée en ce que** la première gaine intermédiaire (22) et la seconde gaine intermédiaire (26) délimitent entre elles un espace annulaire de test (30) de l'intégrité de la première gaine intermédiaire (22),
la conduite (10) comprenant une couche de maintien (44) de la pression de test disposée autour de la seconde gaine intermédiaire (26).

2. Conduite (10) selon la revendication 1, **caractérisée en ce que** la couche externe est une gaine externe (24) en polymère.

3. Conduite (10) selon la revendication 1, **caractérisée en ce que** la couche de maintien (44) de la pression de test comporte au moins un ruban de renfort enroulé autour de la seconde gaine intermédiaire (26), notamment en Kevlar® ou en aramide, ou comprend des fils enroulés autour de la seconde gaine intermédiaire (26), les fils ayant avantageusement une forme plane ou ronde, et étant de préférence formés en acier ou en matériau composite.

4. Conduite (10) selon l'une quelconque des revendications 1 à 3, **caractérisée en ce qu'**elle comprend une couche de protection (46) disposée entre la couche de maintien (44) de la pression de test et la couche externe (24).

5. Conduite (10) selon la revendication 4, **caractérisée en ce que** la couche de protection (46) comporte au moins une gaine en polymère, au moins un ruban de renfort, notamment en aramide, des fils enroulés autour de la couche de maintien (44) de la pression de test, notamment de forme plane ou ronde, de préférence formés en acier ou en matériau composite, des bandes ou des joncs d'isolation et/ou des bandes polymérique ou composite comprenant notamment une matrice thermoplastique dans laquelle sont noyées des fibres de carbone ou des fibres de verre, et/ou une carcasse externe.

6. Conduite (10) selon l'une quelconque des revendications précédentes, **caractérisée en ce qu'**elle comprend un canal (37) d'amenée d'un fluide pressurisé (38) de test dans l'espace annulaire de test (30).

7. Conduite (10) selon la revendication 6, **caractérisée en ce que** le fluide pressurisé (38) dans l'espace annulaire de test (30) est choisi parmi un liquide et un gaz, notamment l'azote ou l'eau.

8. Conduite (10) selon l'une quelconque des revendications précédentes, **caractérisé en ce qu'**elle comprend, dans l'espace annulaire de test (30) contenant le fluide pressurisé (38), une couche de remplissage (50).

9. Conduite (10) selon la revendication 8, **caractérisée en ce que** la couche de remplissage (50) comprend au moins un ruban de renfort, notamment en aramide, des fils enroulés autour de la première gaine intermédiaire (22), notamment de forme plane ou ronde, et de préférence formés en acier ou en matériau composite, des bandes ou des joncs d'isolation, et/ou des bandes polymérique ou composite comprenant notamment une matrice thermoplastique dans laquelle sont noyées des fibres de carbone ou des fibres de verre.

10. Conduite (10) selon l'une quelconque des revendications précédentes, **caractérisée en ce qu'**elle comporte une carcasse interne (48), disposée dans la gaine interne (20), la carcasse interne (48) étant avantageusement formée d'un feuillard métallique agrafé.

11. Méthode de fabrication d'une conduite flexible (10), comportant les étapes suivantes :
- fourniture d'une gaine interne (20) en polymère, la gaine interne (20) définissant un passage interne (16) de circulation d'un fluide transporté ;
- disposition d'une première gaine intermédiaire (22) en polymère, à l'extérieur de la gaine interne (20) ;
- interposition d'au moins une couche d'armures internes (34, 35) entre la gaine interne (20) et la première gaine intermédiaire (22) ;
- disposition d'au moins une couche externe (24) en polymère, à l'extérieur de la première gaine intermédiaire (22) ;
- interposition d'une seconde gaine intermédiaire (26) en polymère, entre la première gaine intermédiaire (22) et la couche externe (24),
**caractérisée en ce que** la première gaine intermédiaire (22) et la seconde gaine intermédiaire (26) délimitent entre elles un espace annulaire de test (30) de l'intégrité de la première gaine intermédiaire (22), la méthode comportant la disposition d'une couche de maintien (44) de la pression de test autour de la seconde gaine intermédiaire (26).

12. Procédé de détermination de l'intégrité d'une conduite flexible comportant les étapes suivantes :
- fourniture d'une conduite flexible (10) selon les revendications 1 à 11 ;
- introduction d'un fluide (38) sous pression dans l'espace annulaire de test (30) ;
- mesure de la pression dans l'espace annulaire de test (30).

13. Procédé selon la revendication 12, **caractérisé en ce que** la mesure est effectuée en l'absence de circulation de fluide dans le passage interne (16), avantageusement lors d'un test de certification de la conduite (10) après fabrication.

14. Procédé selon la revendication 12, **caractérisé en ce que** la mesure s'effectue lors d'une circulation du fluide dans le passage interne (16), avantageusement lors de l'exploitation du fluide.

## Patentansprüche

1. Flexible Fluidtransportleitung (10), aufweisend:
- einen Innenmantel (20) aus Polymer, der einen inneren Durchgang (16) für die Zirkulation eines durch die Leitung (10) transportierten Fluids definiert,
- einen ersten Zwischenmantel (22) aus Polymer, der an der Außenseite des Innenmantels (20) angeordnet ist, wobei der erste Zwischenmantel (22) und der Innenmantel (20) einen ersten Ringraum (28) zwischen einander begrenzen,
- zumindest eine Schicht einer Innenpanzerung (34, 35), die im ersten Ringraum (28) angeordnet ist,
- zumindest eine Außenschicht, die an der Außenseite des ersten Zwischenmantels (22) angeordnet ist,
- einen zweiten Zwischenmantel (26) aus Polymer, der zwischen dem ersten Zwischenmantel (22) und der Außenschicht angeordnet ist,
**dadurch gekennzeichnet, dass** der erste Zwischenmantel (22) und der zweite Zwischenmantel (26) einen ringförmigen Prüfraum (30) zum Prüfen der Unversehrtheit des ersten Zwischenmantels (22) zwischen einander begrenzen,
wobei die Leitung (10) eine Prüfdruckhalteschicht (44) aufweist, die um den zweiten Zwischenmantel (26) herum angeordnet ist.

2. Leitung (10) gemäß Anspruch 1, **dadurch gekennzeichnet, dass** die Außenschicht ein Außenmantel (24) aus Polymer ist.

3. Leitung (10) gemäß Anspruch 1, **dadurch gekennzeichnet, dass** die Prüfdruckhalteschicht (44) zumindest ein um den zweiten Zwischenmantel (26) gewickeltes Verstärkungsband, insbesondere aus Kevlar® oder aus Aramid, oder um den zweiten Zwischenmantel (26) gewickelte Drähte aufweist, wobei die Drähte bevorzugt eine flache oder runde Form haben und vorzugsweise aus Stahl oder aus Verbundmaterial gebildet sind.

4. Leitung (10) gemäß einem der Ansprüche 1 bis 3, **dadurch gekennzeichnet, dass** sie eine Schutzschicht (46) aufweist, die zwischen der Prüfdruckhalteschicht (44) und der Außenschicht (24) angeordnet ist.

5. Leitung (10) gemäß Anspruch 4, **dadurch gekennzeichnet, dass** die Schutzschicht (46) zumindest einen Polymermantel, zumindest ein Verstärkungsband, insbesondere aus Aramid, um die Prüfdruckhalteschicht (44) gewickelte Drähte, insbesondere von ebener oder runder Form, vorzugsweise aus Stahl oder Verbundwerkstoff gebildet, Isolierbänder oder -stäbe und/oder Polymer- oder Verbundbänder, die insbesondere eine thermoplastische Matrix aufweisen, in die Kohlenstofffasern oder Glasfasern eingebettet sind, und/oder eine äußere Karkasse aufweist.

6. Leitung (10) gemäß einem der vorhergehenden Ansprüche, **dadurch gekennzeichnet, dass** sie einen Zuführkanal (37) eines unter Druck stehenden Prüffluids (38) in den ringförmigen Prüfraum (30) aufweist.

7. Leitung (10) gemäß Anspruch 6, **dadurch gekennzeichnet, dass** das unter Druck stehende Fluid (38) im ringförmigen Prüfraum (30) aus einer Flüssigkeit und einem Gas, insbesondere Stickstoff oder Wasser, ausgewählt ist.

8. Leitung (10) gemäß einem der vorhergehenden Ansprüche, **dadurch gekennzeichnet, dass** sie im ringförmigen Prüfraum (30), der das unter Druck stehende Fluid (38) enthält, eine Füllschicht (50) aufweist.

9. Leitung (10) gemäß Anspruch 8, **dadurch gekennzeichnet, dass** die Füllschicht (50) zumindest ein Verstärkungsband, insbesondere aus Aramid, um den ersten Zwischenmantel (22) gewickelte Drähte, insbesondere von ebener oder runder Form und vorzugsweise aus Stahl oder Verbundmaterial geformt, Isolierbänder oder -stäbe und/oder Polymer- oder Verbundbänder aufweist, die insbesondere eine thermoplastische Matrix aufweisen, in die Kohlenstofffasern oder Glasfasern eingebettet sind.

10. Leitung (10) gemäß einem der vorhergehenden Ansprüche, **dadurch gekennzeichnet, dass** sie eine innere Karkasse (48) aufweist, die am Innenmantel (20) angeordnet ist, wobei die innere Karkasse (48) bevorzugt aus einem gefalzten Metallband gebildet ist.

11. Herstellungsverfahren einer flexiblen Leitung (10), die folgenden Schritte aufweisend:
- Bereitstellen eines Innenmantels (20) aus Polymer, wobei der Innenmantel (20) einen inneren Durchgang (16) für die Zirkulation eines transportierten Fluids definiert,
- Anordnen eines ersten Zwischenmantels (22) aus Polymer an der Außenseite des Innenmantels (20),
- dazwischen Anordnen von zumindest einer Schicht einer Innenpanzerung (34, 35) zwischen dem Innenmantel (20) und dem ersten Zwischenmantel (22),
- Anordnen von zumindest einer Außenschicht (24) aus Polymer an der Außenseite des ersten Zwischenmantels (22),
- dazwischen Anordnen eines zweiten Zwischenmantels (26) aus Polymer zwischen dem ersten Zwischenmantel (22) und der Außenschicht (24), **dadurch gekennzeichnet, dass**
der erste Zwischenmantel (22) und der zweite Zwischenmantel (26) einen ringförmigen Prüfraum (30) zum Prüfen der Unversehrtheit des ersten Zwischenmantels (22) zwischen einander begrenzen, wobei das Verfahren aufweist
Anordnen einer Prüfdruckhalteschicht (44) um den zweiten Zwischenmantel (26) herum.

12. Verfahren zum Ermitteln der Unversehrtheit einer flexiblen Leitung, die folgenden Schritte aufweisend:
- Bereitstellen einer flexiblen Leitung (10) gemäß den Ansprüchen 1 bis 11,
- Einleiten eines unter Druck stehenden Fluids (38) in den ringförmigen Prüfraum (30),
- Messen des Drucks im ringförmigen Prüfraum (30).

13. Verfahren gemäß Anspruch 12, **dadurch gekennzeichnet, dass** die Messung in Abwesenheit einer Fluidzirkulation im inneren Durchgang (16) durchgeführt wird, vorzugsweise während einer Zertifizierungsprüfung der Leitung (10) nach der Herstellung.

14. Verfahren gemäß Anspruch 12, **dadurch gekennzeichnet, dass** die Messung durchgeführt wird, wenn eine Fluidzirkulation im inneren Durchgang (16) vorhanden ist, vorzugsweise bei einer Fluidexploration.

## Claims

1. Flexible pipe (10) for transporting fluid, comprising:
- an inner polymer sheath (20) which defines an inner passage (16) for circulation of a fluid transported by the pipe (10);
- a first intermediate polymer sheath (22) arranged outside the inner sheath (20), the first intermediate sheath (22) and the inner sheath (20) delimiting between them a first annular space (28);
- at least one inner armour layer (34, 35) arranged in the first annular space (28);
- at least one outer layer arranged outside the first intermediate sheath (22);
- a second intermediate polymer sheath (26) interposed between the first intermediate sheath (22) and the outer layer,
**characterised in that**
the first intermediate sheath (22) and the second intermediate sheath (26) delimit between them an annular test space (30) for testing the integrity of the first intermediate sheath (22),
the pipe (10) comprising a test pressure maintenance layer (44) arranged around the second intermediate sheath (26).

2. Pipe (10) according to claim 1, **characterised in that** the outer layer is an outer polymer sheath (24).

3. Pipe (10) according to claim 1, **characterised in that** the test pressure maintenance layer (44) comprises at least one reinforcing tape wound around the second intermediate sheath (26), especially made of Kevlar® or of aramid, or comprises wires wound around the second intermediate sheath (26), the wires advantageously having a flat or round shape and preferably being formed of steel or of composite material.

4. Pipe (10) according to any one of claims 1 to 3, **characterised in that** it comprises a protecting layer (46) arranged between the test pressure maintenance layer (44) and the outer layer (24).

5. Pipe (10) according to claim 4, **characterised in that** the protecting layer (46) comprises at least one polymer sheath, at least one reinforcing tape, especially made of aramid, wires wound around the test pressure maintenance layer (44), especially of flat or round form, preferably formed of steel or of composite material, insulating strips or rings, and/or polymer or composite strips comprising especially a thermoplastic matrix in which carbon fibres or glass fibres are embedded, and/or an outer carcass.

6. Pipe (10) according to any one of the preceding claims, **characterised in that** it comprises a channel (37) for guiding a pressurised test fluid (38) into the annular test space (30).

7. Pipe (10) according to claim 6, **characterised in that** the pressurised fluid (38) in the annular test space (30) is chosen from a liquid and a gas, especially nitrogen or water.

8. Pipe (10) according to any one of the preceding claims, **characterised in that** it comprises, in the annular test space (30) containing the pressurised fluid (38), a filling layer (50).

9. Pipe (10) according to claim 8, **characterised in that** the filling layer (50) comprises at least one reinforcing tape, especially made of aramid, wires wound around the first intermediate sheath (22), especially of flat or round form, and preferably formed of steel or of composite material, insulating strips or rings, and/or polymer or composite strips comprising especially a thermoplastic matrix in which carbon fibres or glass fibres are embedded.

10. Pipe (10) according to any one of the preceding claims, **characterised in that** it comprises an inner carcass (48) arranged in the inner sheath (20), the inner carcass (48) advantageously being formed of an interlocked metal strip.

11. Method for manufacturing a flexible pipe (10), comprising the following steps:
- providing an inner polymer sheath (20), the inner sheath (20) defining an inner passage (16) for circulation of a transported fluid;
- arranging a first intermediate polymer sheath (22) outside the inner sheath (20);
- interposing at least one inner armour layer (34, 35) between the inner sheath (20) and the first intermediate sheath (22);
- arranging at least one outer polymer layer (24) outside the first intermediate sheath (22);
- interposing a second intermediate polymer sheath (26) between the first intermediate sheath (22) and the outer layer (24),
**characterised in that**
the first intermediate sheath (22) and the second intermediate sheath (26) delimit between them an annular test space (30) for testing the integrity of the first intermediate sheath (22),
the method comprising arranging a test pressure maintenance layer (44) around the second intermediate sheath (26).

12. Process for determining the integrity of a flexible pipe, comprising the following steps:
- providing a flexible pipe (10) according to claims 1 to 11;
- introducing a fluid (38) under pressure into the annular test space (30);
- measuring the pressure in the annular test space (30).

13. Process according to claim 12, **characterised in that** the measurement is carried out in the absence of circulation of fluid in the inner passage (16), advantageously during a certification test of the pipe (10) following manufacture.

14. Process according to claim 12, **characterised in that** the measurement is carried out while fluid is circulating in the inner passage (16), advantageously during extraction of the fluid.
